# EUROPÄISCHE PATENTSCHRIFT

(11) **EP 2 839 970 B1**
(45) Veröffentlichungstag und Bekanntmachung des Hinweises auf die Patenterteilung: **01.11.2017**
(21) Anmeldenummer: 13004134.6
(22) Anmeldetag: 21.08.2013
(51) Int. Cl.: B44B 5/02, B23K 26/00, B30B 5/04, B44C 5/04, B44F 9/00, B29C 59/02

(54) **Verfahren zur Herstellung einer hydrophoben oder superhydrophoben Oberflächentopografie**
Method for producing a hydrophobic or superhydrophobic surface topography
Procédé de fabrication d'une topographie de surface hydrophobe ou super-hydrophobe

(43) Veröffentlichungstag der Anmeldung: 25.02.2015
(73) Patentinhaber: Hueck Rheinische GmbH, 41747 Viersen (DE)
(72) Erfinder: Espe, Oliver, 44795 Bochum (DE)
(74) Vertreter: Ofner, Clemens

(56) Entgegenhaltungen:
- EP-A1- 2 289 708
- EP-B1- 0 772 514
- DE-A1-102006 022 722
- DE-U1-202012 004 375
- US-A1- 2011 287 203

## Beschreibung

Die Erfindung betrifft ein Verfahren zur Herstellung einer hydrophoben oder superhydrophoben Oberflächentopografie eines Presswerkzeuges in Form eines Pressbleches, Endlosbandes oder einer Prägewalze zur Herstellung von Kunststofffolien, Trennfolien, PVC-Oberflächen und LVT (luxury vinyl tiles).

Gattungsgemäße Presswerkzeuge werden dazu benötigt, Werkstoffplatten herzustellen, die aus einer Substratschicht, vorzugsweise Holz-Substratschicht bestehen, auf der in Harz getränkte Papierblätter aufgelegt werden. Hierzu wird zumindest ein Dekorpapier und ein Overlaypapier verwendet, wenn nicht aus fertigungstechnischen Gründen sowohl Underlay- als auch Overlaypapiere notwendig sind oder gegebenenfalls mehrere Overlaypapiere mit Korund, um die Verschleißfestigkeit der Oberflächen zu verbessern.

Zur Vermeidung von Krümmungen der Werkstoffplatten werden bevorzugt beide Seiten mit einer annähernd gleichen Zahl von Overlay- und Unterlay-Papieren beschichtet.
In Pressenanlagen werden die Werkstoffplatten aufgeheizt und verpresst, sodass die Duroplastharze beispielsweise in Form von Aminoharzen ausgehärtet werden. Während der Aushärtung wird die Oberflächenstruktur der Pressbleche auf die Werkstoffplatten übertragen, sodass diese nicht nur die gewünschte Maserung, sondern darüber hinaus eine reliefartige deckungskonforme Tiefenstruktur zum Dekorpapier erhalten. Zu diesem Zweck werden die Papierlagen mit Duroplastharzen getränkt, sodass nicht nur eine Aushärtung erfolgen kann, sondern gleichzeitig eine Transparenz der einzelnen Papierlagen besteht, um die Dekorschicht bei dem fertigen Produkt, das heißt den Werkstoffplatten durchscheinen zu lassen. Die Substratschicht der Werkstoffplatten besteht vorzugsweise aus Holzsubstraten oder Papierlagen, die mit dem getränkten und bedruckten Papierbahnen abgedeckt und in den Pressenanlagen mit entsprechenden Pressblechen aus Stahl oder Messing verpresst werden. Die Pressbleche können hierbei eine glatte oder strukturierte Oberfläche aufweisen, je nachdem welche Kundenwünsche vorliegen. Anschließend werden die Oberflächen in der Regel verchromt, damit gegenüber den Duroplastharzen eine gute Trenneigenschaft erreicht wird und zudem eine Oberflächenhärte vorliegt, die möglichst viele Pressvorgänge mit ein und demselben Presswerkzeug gestattet. Die Chromschicht dient zudem zum Schutz gegen Beschädigungen der Strukturoberfläche.

Bei den eingesetzten Holz-Substratschichten kann es sich um HDF-, MDF-, OSB-, Span- oder Sperrholzplatten handeln, während es sich hingegen bei den HPL-Platten nur um mehrlagige Papierbahnen handelt, die beispielsweise aus Natronkraft- und Edelzellstoffpapieren bestehen, die wiederum bedruckt oder unifarbig hergestellt wurden. Die Gestaltungsvarianten sind hierbei durch die Dekorpapiere sehr hoch, beispielsweise können diese Stein-, Leder, Gewebe oder Holzimitationen aufweisen, wobei nach dem Pressvorgang mit eingesetzten Pressblechen, die mit einer synchron angeordneten Struktur versehen sind, die einzelne Dekore durch die Struktur überlagert, das heißt deckungskonform geprägt werden, sodass die Vertiefungen beispielsweise dem Verlauf der Holzadern folgen und damit die Natürlichkeit der Werkstoffplatten besonders herausstellen. Bei der Herstellung von Laminatfußböden werden zum Beispiel die Dekorstrukturen mit einer synchron verlaufenden Struktur auf dem Pressblech in den Pressenanlagen verpresst und damit die Echtheit der Holzimitation besonders verstärkt. Zudem besteht die Möglichkeit, durch spezielle Behandlungen der Presswerkzeuge die Oberfläche teilweise in verschiedenen Glanzgraden herzustellen, sodass die tieferliegenden Schichten der verpressten Werkstoffplatten einen niedrigen oder gegebenenfalls höheren Glanzgrad aufweisen als die umgebenden Bereiche. Die hergestellten Werkstoffplatten können einerseits für die Möbelindustrie und andererseits für den Innenausbau, und zwar Fußbodenpaneelen sowie Wand- und Deckenverkleidungen verwendet werden.

Leider hat sich herausgestellt, dass sich derartige Oberflächen schlecht reinigen lassen. Speziell im Fußbodenbereich, wo die Laminatplatten mit ihrer Nut und Feder zusammengefügt werden, entstehen Probleme, wenn mit wasserhaltigen Reinigungssystemen gearbeitet wird. Obwohl die Fugen in der Regel versiegelt werden, tritt in Folge des Wassereintritts Dickenquellung in der Substratschicht, insbesondere bei einem Holzsubstrat auf und führt zu Kantenaufwerfungen und Dickenunterschiede, die nicht gewünscht sind.
Ferner können bestimmte Strukturen bei Möbel- oder Wand- und Deckenplatten fast nur mechanisch gereinigt werden und führen zu Beschädigungen der Oberflächen. Die Reinigung von strukturierten und glatten Melaminharzoberflächen ist bis heute unzureichend gelöst und bedarf einer Verbesserung.
Aus der EP 2 289 708 A1 ist die Herstellung eines Presswerkzeuges mithilfe einer Laserstrukturierung bekannt, wobei zur Steuerung die Daten einer abgeformten 3D-Topografie verwendet werden.

Aus der US-Anmeldung 2011/0287203 A1 ist ein Prägewerkzeug mit einer superhydrophoben Oberflächentopographie bekannt. Aus der europäischen Anmeldung EP 0 772 514 B1 ist beispielsreise eine reinigungsfreundliche Oberfläche bekannt, bei der die strukturellen Erhebungen aus hydrophoben Polymeren oder haltbaren hydrophobierten Materialien bestehen.

Aus der CH-PS-26 82 58 ist die Herstellung einer wasserabstoßenden Oberfläche bekannt, die mit Wasser einen Kontaktwinkel über 120° bildet, sodass eine Verschmutzung herabgesetzt ist. Die Oberfläche wird hierbei dadurch erzielt, dass zusätzlich eine Schicht von Pulver, wie Kaolin, Talkum, Ton oder Silikalgel aufgetragen wird, wobei das Pulver zuvor durch organische Siliziumverbindungen hydrophobiert wird.

Aus der DE 10 23 217 A1 ist eine Form zum Herstellen von Formkörpern mit rauer Oberfläche bekannt, wobei die Form selbst aus Kautschuk oder Kunststoff mit rauer Oberfläche verwendet wird.

Die JP-A-62-191447 beschreibt demgegenüber ein Verfahren, um die Wasserabstoßung einer Oberfläche zu erhöhen. Hierzu wird ein Plasmapolymerfilm aufgetragen, welcher durch Ätzen aufgeraut wird, um anschließend einen zweiten Plasmapolymerfilm aufzutragen. Aus der JP-A-3-174279 ist ein Verfahren zur Herstellung von matten, dekorativen Oberflächen auf Bögen und Folien gekannt.

Die vorgenannten Technologien beschäftigen sich aber nicht mit Melaminharzoberflächen und sind durch zusätzliche Auftragung von Kunststoffschichten für den vorgesehenen Verwendungszweck nicht einsetzbar.

Der vorliegenden Erfindung liegt daher die Aufgabe zugrunde, ein neuartiges Verfahren aufzuzeigen, mit dem die Oberflächen der Fußboden-, Möbel-, Decken-, Wand- und HPL-Platten, Kunststofffolien, Trennfolien, LVT (luxury vinyl tiles) und PVC-Oberflächen mit einer reinigungsfreundlichen Oberfläche ausgestattet werden können.

Erfindungsgemäß ist zur Lösung der Aufgabe vorgesehen, ein Verfahren anzuwenden, welches die Herstellung einer hydrophoben oder superhydrophoben Oberflächentopografie bei einem Presswerkzeug in Form eines Pressbleches, Endlosbandes oder einer Prägewalze vorsieht, dieses Verfahren umfasst die Schritte:
- Präparation einer Naturvorlage mit einer Mikrostruktur,
- Abnahme der Oberfläche mit einem Harz,
- Scannen der abgeformten Oberflächentopografie durch einen 3D-Scanner,
- Tiefenmessung der Oberflächentopografie mit einem 3D-Mikroskop,
- Umwandlung der digitalisierten Daten aus dem Scanverfahren und der Tiefenmessung zu Graustufen-Bitmaps,
- Verwendung der Graustufen-Bitmaps zur Steuerung des Bearbeitungsvorgangs einer chemischen oder abrasiven Oberflächenbehandlung.

Weitere vorteilhafte Ausgestaltungen der Erfindung ergeben sich aus den Unteransprüchen.

Durch das erfindungsgemäße Verfahren kann die aus der Natur bekannte Mikrostruktur durch Scannen mithilfe eines 3D-Scanners und einer Tiefenmessung mithilfe eines 3D-Mikroskops in digitalisierten Daten erfasst werden, welche zur Graustufen-Bitmaps umgewandelt werden. Die Graustufen-Bitmaps dienen zur Steuerung des Bearbeitungsvorgangs einer chemischen oder abrasiven Oberflächenbehandlung.

Eingehende Untersuchungen von auf diese Weise strukturierten Oberflachen haben gezeigt, dass eine bestimmte Oberflächentopografie eine selbstreinigende Wirkung bei Verschmutzungen aufweist. Hierbei wird die Oberflächentopographie von in der Natur anzutreffenden bekannten Strukturen übernommen, wie sie beispielsweise bei Lotus-, oder Kohlblättern oder anderen ähnlich gestalteten Pflanzenblättern vorliegt. Alternativ besteht die Möglichkeit, die Oberflächenstruktur eines Chitinpanzers von Käfern nachzuempfinden. Hierzu wird die Naturvorlage zunächst präpariert, sodass die Abnahme der Oberfläche mittels eines Gießharzes erfolgen kann, ohne dass die Oberfläche verletzt wird und somit eine naturgetreue Wiedergabe vorliegt. Nach der Aushärtung des Gießharzes entsteht hierbei eine Negativform, die für die Abnahme der Oberfläche vorbereitet wird. Die Abnahme und damit die Digitalisierung der Oberfläche erfolgt in einem ersten Schritt mittels eines 3D-Scanners, der digitalisierte Daten der Oberflächentopografie ermittelt, die für die weiteren Prozessschritte notwendig sind. Die auf diese Weise gewonnenen digitalisierten Daten müssen anschließend weiterbearbeitet werden, um ein digitalisiertes Additionsnutzen zu erhalten. In einem weiteren Arbeitsschritt wird eine Tiefenmessung der Oberflächentopographie mithilfe eines 3D-Mikroskops vorgenommen. Hierzu eignen sich beispielsweise 3D-Mikroskope der Firma Keyence. Die ermittelten digitalisierten Daten des 3D-Mikroskops werden zusammen mit den Daten des 3D-Scanners anschließend In Graustufen-Bitmaps umgewandelt, welche für die Oberflächenbehandlung beziehungsweise Strukturierung verwendet werden.

In weiterer Ausgestaltung der Erfindung ist vorgesehen, dass die Graustufen-Bitmaps zum Auftragen einer Maske nach einem digitalisierten Druckverfahren für weitere Oberflächenbehandlungen verwendet werden. Das Auftragen einer Maske dient hierbei vorzugsweise zur chemischen Oberflächenbehandlung, das heißt zum Ätzen der Oberfläche eines Presswerkzeuges. Das Auftragen der Maske kann auf einem Glattblech erfolgen, aber ebenso auf einer bereits strukturierten Oberfläche eines Presswerkzeuges, um die Mikrostrukturierung zur Erzielung der hydrophoben oder superhydrophoben Oberflächentopografie herzustellen. Die hierbei aufzutragende Maske wird vorzugsweise aus einem UV-Lack hergestellt, der mit einer UV-Lampe zumindest teilweise, vorzugsweise vollständig durchgehärtet wird, um die notwendige Widerstandsfähigkeit gegenüber einem Ätzbad zu gewährleisten. Nach erfolgter Ätzung wird die Maske entfernt, sodass weitere Behandlungsschritte vorgenommen werden können, soweit diese notwendig sind. Die Zeitdauer des Ätzprozesses wird hierbei durch die ermittelte Tiefe der Oberflächentopografie bestimmt, damit die gewünschte Mikrostruktur der Oberflächentopografie erzielt wird. Nach Abschluss des Ätzverfahrens und Entfernen der Maske kann die Oberflächenstruktur zusätzlich elektropoliert oder mechanisch poliert werden, um die erzielte Struktur zusätzlich zu verrunden. Als letzten Prozessschritt schließt sich in der Regel die Hartverchromung an, um die Presswerkzeuge anschließend in einer hydraulischen Ein- oder Mehretagen-Heizpresse einzusetzen, wobei die entsprechenden Substrate gemäß der Kantenpresstechnologie mit den in Melaminharz getränkten Dekorpapieren auf der Ober- und Unterseite beschichtet werden und die negative Strukturoberfläche der Presswerkzeuge auf der Plattenoberfläche abgebildet wird, sodass die Oberfläche der abgenommenen Strukturvorlage der Oberflächentopografie entspricht. Derartig hergestellte Oberflächen weisen eine große Reinigungsfreundlichkeit auf, wobei insbesondere Schmutzpartikel weniger fest an den Flächen anhaften und somit leichter entfernt werden können. Das erfindungsgemäße Verfahren kann hierbei sowohl auf Edelstahl-Endlosbändern, Pressblechen als auch auf Prägewalzen angewendet werden.

Alternativ besteht die Möglichkeit, dass anstelle einer Maske die mithilfe des Verfahrens gewonnenen digitalisierten Daten direkt zur Strukturierung mithilfe beispielsweise eines Lasers oder einer Wasserstrahlvorrichtung eingesetzt werden. Die abrasive Bearbeitung der Oberfläche des Presswerkzeuges erfolgt in diesem Fall auf einem Arbeitstisch, der die Möglichkeit einer festen Fixierung des Presswerkzeuges ermöglicht und der Bearbeitungskopf in einer X- und Y-Ebene mithilfe von Antriebseinheiten oder bei einem feststehenden Bearbeitungskopf der Arbeitstisch verfahrbar ist. Die Verweildauer des abrasiven Werkzeugs, beispielsweise eines Wasserstrahls, oder die Verweildauer, Fokussierung und/oder Intensität eines Laserstrahls wird hierbei ebenso durch die Graustufen-Bitmaps bestimmt. Hierzu werden vorzugsweise die ermittelten Daten aus der Tiefenmessung mithilfe des 3D-Mikroskops verwendet. Somit kann über die Verweildauer, Fokussierung und Intensität beispielsweise des Laserstrahls die Tiefe exakt gesteuert werden. Ähnlich verhält es sich bei einer Wasserstrahlvorrichtung, bei der die Verweildauer über einem Matrixpunkt der Oberfläche entsprechend gesteuert werden kann.

Im Anschluss kann die so erhaltene Oberflächenstruktur wiederum elektropoliert oder mechanisch poliert werden, um die Struktur, soweit erforderlich, zusätzlich zu verrunden. Im Anschluss daran steht in der Regel der letzte Prozessschritt an, und zwar die Hartverchromung, um die Oberflächenhärte herzustellen, damit das Presswerkzeug eine ausreichende Anzahl von Verpressungen ermöglicht.

Das aufgezeigte Verfahren dient hierbei dazu, eine hydrophobe oder superhydrophobe Oberflächentopografie herzustellen, damit eine Verbesserung des Reinigungseffektes erzielt wird. Diese Verfahrensschritte eigenen sich hierbei sowohl für die Anwendung auf einem glatten Presswerkzeug als auch auf einem strukturierten Presswerkzeug, welches anschließend in einer hydraulischen Ein- oder Mehretagenheizpresse eingesetzt wird. Soweit es sich um glatte Presswerkzeuge handelt, werden diese lediglich mit der gewünschten Mikrostruktur der Oberflächentopografie versehen. Soweit es sich hingegen um strukturierte Presswerkzeuge handelt, die beispielsweise eine Holzmaserung emittieren, kann nach Abschluss der Strukturierungsschritte die hydrophobe oder superhydrophobe Mikrostruktur zusätzlich aufgetragen werden, um auch bei diesen Presswerkzeugen die gewünschte Reinigungswirkung zu erzielen.

Vorzugsweise sind diese Verfahrensschritte als Ersatz für eine partielle Glanzgradeinstellung vorgesehen. Dies schließt aber nicht aus, dass die abschließende Hartverchromung in derart erfolgt, dass in partiellen Bereichen durch unterschiedliche Hartverchromung unterschiedliche Glanzgrade erzielt werden oder die Hartverchromung anschließend in partiellen Bereichen zur Einstellung des Glanzgrades nachbehandelt wird.

Mithilfe der digitalen Drucktechnik besteht die Möglichkeit, dass anstelle einer vollflächigen Hartverchromung eine partielle Hartverchromung der Oberflächentopografie als weitere Oberflächenbehandlung durchgeführt wird. Hierbei kann es sich um Chromschichten handeln, die eine unterschiedliche Obertlächenrauigkeit aufweisen und damit einen unterschiedlichen Glanzgrad bestimmen. Alternativ besteht die Möglichkeit, dass nach erfolgter Hartverchromung eine vollflächige oder partielle Glanzgradeinstellung als weitere Oberflächenbehandlung durchgeführt wird. Zu diesem Zweck kann mithilfe einer Maske eine partielle Abdeckung des Presswerkzeuges erfolgen, sodass die freiliegenden Bereiche, soweit diese nicht von der Maske abgedeckt sind, zusätzlichen Bearbeitungsschritten unterzogen werden können, die beispielsweise aus einem weiteren chemischen Verfahrensschritt, einer Elektropolierung oder einer mechanischen Polierung bestehen.
Zur Durchführung der ersten Verfahrensschritte ist hierbei die Verwendung eines Epoxidharzes oder Silikonharzes zur Abformung vorgesehen, weil dieses die Oberfläche nicht verletzt und naturgetreu wiedergibt, wobei insbesondere Silikonharze mit ultrafeinen Zusätzen bestens geeignet sind, um Feinstrukturen nachzubilden.
Derartig gefertigte Presswerkzeuge können zum Prägen von Werkstoffplatten, aber ebenso zum Prägen von Kunststofffolien, Trennfolien, LVT-Produkten (luxury vinyl tiles) und PVC-Oberflächen für den Fußboden, Wand- und Möbelbereich eingesetzt werden. In einer Vorrichtung, mit der das Verfahren durchgeführt werden kann, ist eine Auflageeinrichtung für die Presswerkzeuge und die Verwendung von Graustufen-Bitmaps zur Oberflächenbearbeitung vorgesehen, wobei die Graustufen-Bitmaps zur Steuerung einer Maskenauftragung für eine Ätzung oder für eine Strukturierungseinrichtung verwendbar sind und eine Bewegung des Bearbeitungskopfes in Richtung der X- und Y-Koordinate innerhalb einer aufgespannten Ebene oder bei einem feststehenden Bearbeitungskopf die Auflageeinrichtung in X- und Y-Richtung bewegbar ist, und die Strukturierungseinrichtung einen Laser als Bearbeitungskopf oder einen Bearbeitungskopf mit einer Wasserdüse umfasst, wobei bei einer abrasiven Bearbeitung der Oberfläche des Presswerkzeuges die Verweildauer des abrasiven Werkzeugs, beispielsweise eines Wasserstrahls, oder die Verweildauer, Fokussierung und/oder Intensität eines Laserstrahls durch die Graustufen-Bitmaps festlegen, und die Tiefenstrukturierung durch die Daten des 3D-Mikroskops erfolgt. Möglich ist die Verwendung eines Pressbleches, Endlosbandes oder einer zylindrischen Prägewalze als Presswerkzeug zum Verpressen und/oder Prägen von Werkstoffplatten, Kunststofffolien, Trennfolien, PVC-Folien, LVT, mit einer glatten oder naturgetreu strukturierten Oberfläche bis zu einer Tiefe von 500 µm zur Herstellung einer hydrophoben oder superhydrophoben Oberflächentopografie auf einer glatten oder strukturierten Oberfläche einer Werkstoffplatte. Durch die Verwendung eines derart gepressten Presswerkzeuges kann im Weiteren eine Werkstoffplatte hergestellt werden, welche mit einer hydrophoben oder superhydrophoben Oberflächentopografie ausgestattet ist. Die nach dem Verfahren hergestellten Presswerkzeuge können in hydraulischen Ein- und Mehretagenheizpressen eingesetzt werden.
Durch die vorliegende Erfindung wird im Wesentlichen die Möglichkeit geschaffen, zunächst die Presswerkzeuge und nach erfolgter Verpressung die Oberfläche der Werkstoffplatten mit einer Mikrostrukturierung zu versehen, die hydrophobe oder superhydrophobe Eigenschaften aufweist. Hiermit wird die Anhaftung von Schmutzpartikeln wesentlich erschwert, sodass die Reinigung derartiger Oberflächen wesentlich leichter und besser durchgeführt werden kann. Zu diesem Zweck erfolgt die Abformung einer solch strukturierten Mikrostruktur aus der Natur, und zwar mithilfe eines 3D-Scanners und eines 3D-Mikroskops, um die Feinheit der Struktur insbesondere hinsichtlich der Tiefe auf das Presswerkzeug und damit die Werkstoffplatte zu übertragen. Die nach dem Verfahren hergestellten Werkstoffplatten eignen sich hervorragend zur Herstellung von Möbeln, Fußboden-, Decken- und Wandplatten sowie HPL-Platten. Des Weiteren besteht die Möglichkeit, die Presswerkzeuge zum Prägen von Kunststofffolien, Trennfolien, PVC-Oberflächen und LVT (luxury vinyl tiles) zu verwenden, die für den Fußboden und Wandbereich eingesetzt werden.

Die Erfindung wird im Weiteren anhand der Figuren nochmals erläutert.

Es zeigt
- Fig. 1: in einer perspektivischen Ansicht ein Pressblech mit einer Oberflächenstrukturierung,
- Fig. 2: in einer vergrößerten Querschnittsansicht das aus Figur 1 bekannte Pressblech mit Strukturierung,
- Fig. 3: in einer stark vergrößerten Querschnittsansicht das Pressblech gemäß Figur 1 mit einer Mikrostrukturierung,
- Fig. 4: in einer Draufsicht eine erste Vorrichtung zur Durchführung des erfindungsgemäßen Verfahrens und
- Fig. 5: in einer Draufsicht eine zweite Vorrichtung zur Durchführung des erfindungsgemäßen Verfahrens.

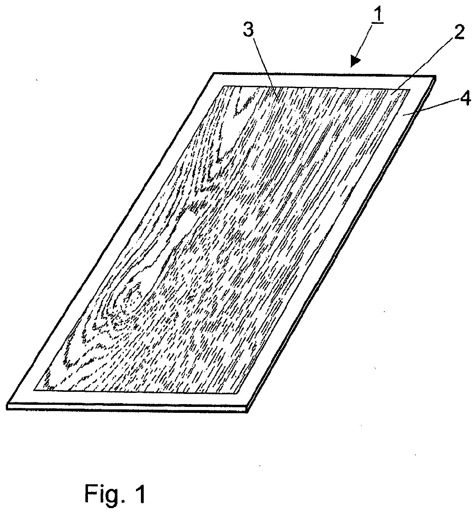

Figur 1 zeigt in einer perspektivischen Ansicht ein Pressblech 1 mit einer Oberflächenstrukturierung, welches aus einem Stahl- oder Messingblech bestehen kann. Auf der Oberfläche 2 des Pressbleches 1 ist eine Holzmaserung 3 ausgebildet, die beispielsweise durch Auftragen einer Maske und anschließender Ätzung hergestellt wurde. Alternativ besteht die Möglichkeit, mithilfe einer Wasserstrahlvorrichtung oder eines Lasers und entsprechender Steuereinheit die Strukturierung auf der Oberfläche 2 vorzunehmen.

Ein umlaufender Rand 4 dient hierbei zur Aufnahme und Erfassung innerhalb einer nicht dargestellten hydraulischen Ein- oder Mehretagenpresse.

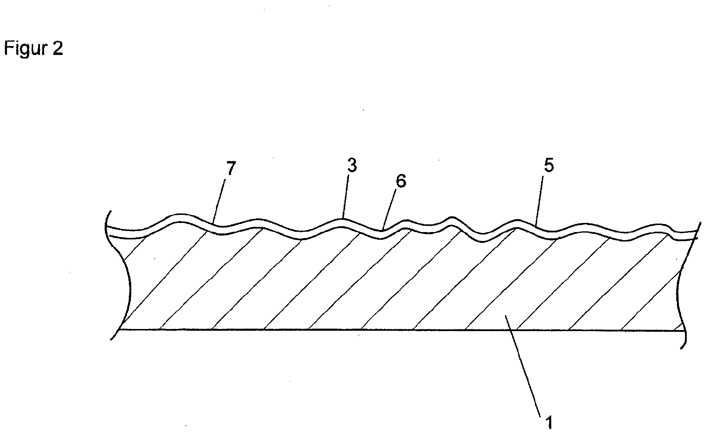

Figur 2 zeigt in einer vergrößerten Schnittansicht das Pressblech 1 mit einer Holzmaserung 3. Durch die Vergrößerung wird deutlich, dass die Holzmaserung 3 aus erhöhten Bereichen 5 und tieferliegenden Bereichen 6 besteht, die beispielsweise mithilfe eines Ätzverfahrens, einer Laserbearbeitung oder einer Wasserstrahlbearbeitung hergestellt wurden. Auf dieser Holzmaserung 3 ist im Weiteren eine Hartchromschicht 7 aufgetragen, die im gezeigten Ausführungsbeispiel vollflächig auf dem Pressblech 1 ausgebildet ist. Alternativ besteht die Möglichkeit, eine weitere Hartverchromung in partiellen Bereichen, beispielsweise in den tiefergehenden Bereichen 6 oder den erhöhten Bereichen 5 der vorhandenen Holzmaserung 3 zusätzlich aufzutragen.

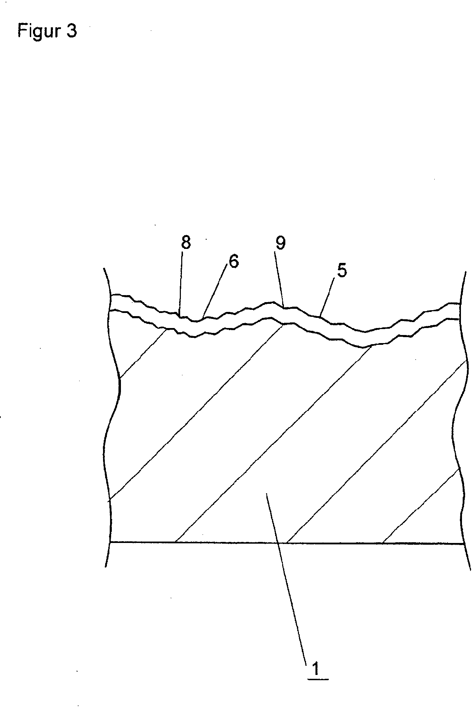

Figur 3 zeigt in einer stark vergrößerten Schnittdarstellung das Pressblech 1 mit der Holzmaserung 3 und einer Mlkrostrukturierung 8, die durch Anwendung des erfindungsgemäßen Verfahrens erzielt wird und zu einer hydrophoben oder superhydrophoben Oberflächentopografie führt, sodass Schmutzpartikel auf der Oberfläche wesentlich schlechter anhaften können und damit eine verbesserte Reinigungsmöglichkeit gegeben ist. Die Mikrostrukturierung 8 ist zusätzlich durch eine Hartverchromung 9 abgedeckt, um die Haltbarkeit der Presswerkzeuge zu erhöhen. Auch in diesem Fall besteht die Möglichkeit, auf die vorhandene Hartverchromung 9 zusätzlich zumindest in partiellen Bereichen eine weitere Verchromung aufzutragen, um die tiefliegenden Bereiche 6 beziehungsweise die erhabenen Bereiche 5 mit einem anderen Oberflächenglanzgrad zu versehen.

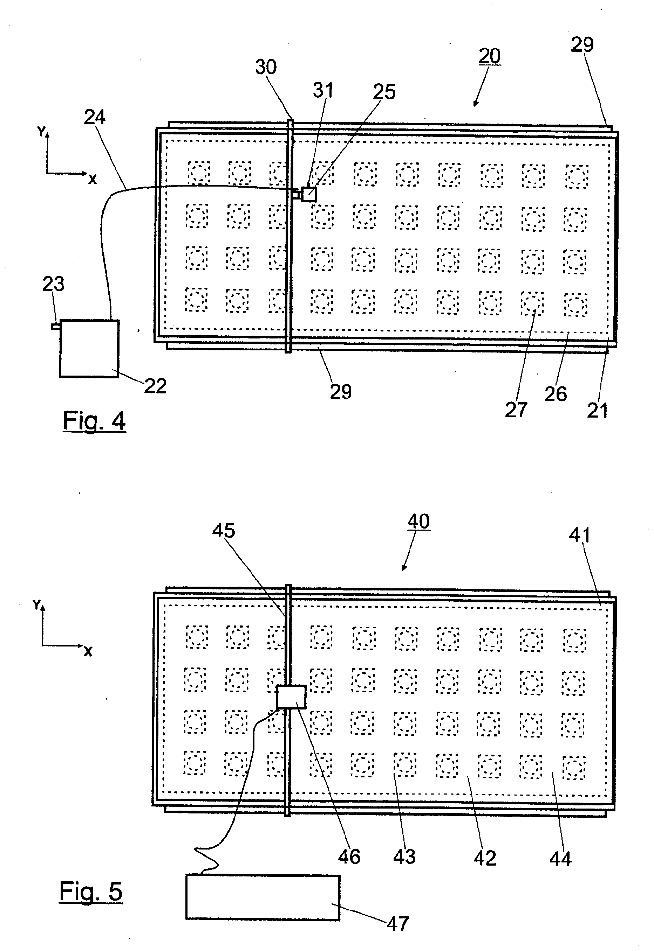

Figur 4 zeigt in einer Draufsicht eine Vorrichtung 20 zur Durchführung des erfindungsgemäßen Verfahrens mit einer Wasserstrahldüse als Bearbeitungskopf. Die Vorrichtung besteht aus einem Wasserbecken 21, in weichem eine Auflageeinrichtung 26 angeordnet ist. In der Auflageeinrichtung 26 befinden sich Aussparungen, in welchen Ansaugmittel 27, bei welchen es sich um Ansaugöffnungen mit einer gummielastischen Dichtung oder Saugglocken handeln kann, angeordnet sind. Dadurch kann das Pressblech 1, dessen Oberfläche 2 bearbeitet werden soll, flächig auf der Auflageeinrichtung 26 fixiert werden. Die Vorrichtung weist ferner eine Hochdruckpumpeneinheit 22 mit Anschlussleitungen 23 auf. Durch die Anschlussleitungen 23 wird die Hochdruckpumpeneinheit 22 mit Wasser versorgt. Dabei kann es sich um rückgewonnenes Wasser handeln, das zuvor bereits für die Oberflächenstrukturierung des Werkstückes 1 verwendet wurde. Das Wasser wird über ein Wasserführungselement 24 einem Bearbeitungskopf 25 zugeführt. Über einen Abrasivmittel-Anschluss 31 kann dem Bearbeitungskopf 25 ein Abrasivmittel zugeführt werden, welches durch das in der Wasserdüse schnell strömende Wasser in diese eingesogen wird, wodurch aus der Wasserdüse ein Wasser-Abrasivmittel-Strahl austritt.

Mithilfe zweier Führungsschienen 29 in x-Richtung wird der Bearbeitungskopf 25 in x-Richtung verfahren. Mithilfe einer weiteren Führungsschiene 30 in y-Richtung, die beweglich an den Führungsschienen 29 in x-Richtung gelagert ist, wird der Bearbeitungskopf 25 in y-Richtung verfahren, der beweglich an der Führungsschiene 30 In y-Richtung angeordnet ist. Bei entsprechender Ausgestaltung der Vorrichtung ist es auch möglich, nur eine Führungsschiene in x-Richtung vorzusehen. Durch die Überlagerung der Bewegungen parallel zu den Führungsschienen 28, 29 ist jede Position (x, y) der Oberfläche 2 durch den Bearbeitungskopf 25 anfahrbar. Die Abtragungstiefe an der Position (x, y) der Oberfläche 2 wird erfindungsgemäß durch die Vortriebsgeschwindigkeit des Bearbeitungskopfes 25 in x- und/oder y-Richtung, den Wasserdruck, den Volumenstrom, die Bestrahlungszeit oder den Abstand zwischen Oberfläche 2 und Bearbeitungskopf 25 gesteuert, wobei hierzu die ermittelten Graustufen-Bitmapdaten herangezogen werden.

Figur 5 zeigt in einer Draufsicht eine Vorrichtung 40 zur Durchführung des erfindungsgemäßen Verfahrens mit einem Laser als Bearbeitungskopf oder einer Druckeinheit. Die Vorrichtung 40 besteht aus einem Auflagetisch 41 mit einer ebenen Arbeitsfläche 42. Innerhalb der Arbeitsfläche 42 sind Vertiefungen 43 ausgebildet, die mit einer Vakuumpumpe verbunden sind, sodass ein auf der Arbeitsfläche 42 aufliegendes Pressblech 1 angesaugt und damit für die weiteren Bearbeitungsvorgänge fixiert werden kann. Über eine Traverse 45 ist ein Bearbeitungskopf 46 in Richtung der Y-Koordinate bewegbar. Die Traverse 45 ist demgegenüber in Richtung der X-Koordinate bewegbar, sodass der Bearbeitungskopf 46 jeden Punkt der Oberfläche des Presswerkzeuges 44 erreichen kann. Anstelle der Bewegung des Bearbeitungskopfes 46 könnte auch ein feststehender Bearbeitungskopf verwendet werden und die Arbeitsfläche 42 mit aufliegendem Presswerkzeug 44 in X- und Y-Richtung bewegt werden.

Über eine Steuereinheit 47 wird die Verfahrbarkeit der Traverse 45 und des Bearbeitungskopfes 46 gesteuert, wobei diese ihre Daten aus den Graustufen-Bitmaps erhält. Der Bearbeitungskopf kann hierbei beispielsweise aus einem Druckkopf bestehen, um eine Maske auf die Oberfläche des Presswerkzeuges 44 aufzutragen. Im Anschluss kann das Presswerkzeug 44 geätzt werden. Alternativ besteht die Möglichkeit, dass es sich um einen abrasiven Bearbeitungskopf handelt, beispielsweise einen Laser, der ebenfalls mit der Steuereinheit 47 in jede Position in der X- und Y-Ebene verfahren werden kann, um eine Laserstrukturierung der Oberfläche des Presswerkzeuges 44 vorzunehmen, wobei hierzu die ermittelten Graustufen-Bitmapdaten herangezogen werden.

### Bezugszeichenliste

- 1: Pressblech
- 2: Oberfläche
- 3: Holzmaserung
- 4: Rand
- 5: Bereich
- 6: Bereich
- 7: Hartchromschicht
- 8: Mikrostrukturierung
- 9: Hartverchromung
- 20: Vorrichtung
- 21: Wasserbecken
- 22: Hochdruckpumpeneinheit
- 23: Anschlussleitung
- 24: Wasserführungselement
- 25: Bearbeitungskopf
- 26: Auflageeinrichtung
- 27: Ansaugmittel
- 28: Führungsschiene
- 29: Führungsschiene
- 30: Führungsschiene
- 40: Vorrichtung
- 41: Auflagetisch
- 42: Arbeitsfläche
- 43: Vertiefung
- 45: Traverse
- 46: Bearbeitungskopf
- 47: Steuereinheit

## Patentansprüche

1. Verfahren zur Herstellung einer hydrophoben oder superhydrophoben Oberflächentopografie eines Presswerkzeuges in Form eines Pressbleches (1), Endlosbandes oder einer Prägewalze zur Herstellung von Kunststofffolien, Trennfolien, PVC-Oberflächen und LVT (luxury vinyl tiles), umfassend die Schritte:
- Präparation einer Naturvorlage mit einer Mikrostruktur,
- Abnahme der Oberfläche mit einem Harz,
- Scannen der abgeformten Oberflächentopografie durch einen 3D-Scanner,
- Tiefenmessung der Oberflächentopografie mit einem 3D-Mikroskop,
- Umwandlung der digitalisierten Daten aus dem Scanverfahren und der Tiefenmessung zu Graustufen-Bitmaps,
- Verwendung der Graustufen-Bitmaps zur Steuerung des Bearbeitungsvorgangs einer chemischen oder abrasiven Oberflächenbehandlung.

2. Verfahren nach Anspruch 1,
**dadurch gekennzeichnet,**
**dass** die Graustufen-Bitmaps zum Auftragen einer Maske nach einem digitalisierten Druckverfahren für weitere Oberflächenbehandlungen verwendet werden.

3. Verfahren nach Anspruch 2,
**dadurch gekennzeichnet,**
**dass** die Maske aus UV-Lack besteht.

4. Verfahren nach Anspruch 2 oder 3,
**dadurch gekennzeichnet,**
**dass** eine chemische Bearbeitung der Oberfläche des Presswerkzeuges nach Auftragen der Maske erfolgt, wobei die Zeitdauer des Ätzprozesses durch die ermittelte Tiefe der abgeformten Oberflächentopografie bestimmt wird.

5. Verfahren nach Anspruch 1,
**dadurch gekennzeichnet,**
**dass** eine abrasive Bearbeitung der Oberfläche des Presswerkzeuges erfolgt, wobei die Verweildauer des abrasiven Werkzeugs, beispielsweise eines Wasserstrahls, oder die Verweildauer, Fokussierung und/oder Intensität eines Laserstrahls durch die Graustufen-Bitmaps bestimmt wird.

6. Verfahren nach einem der Ansprüche 1 bis 5,
**dadurch gekennzeichnet,**
**dass** eine nachfolgende Oberflächenbearbeitung durch Elektropolieren oder mechanisches Polieren erfolgt.

7. Verfahren nach einem der Ansprüche 1 bis 6,
**dadurch gekennzeichnet,**
**dass** eine vollständige und/oder partielle Hartverchromung (9) der Oberflächentopografie eines Presswerkzeuges als nachfolgende Oberflächenbehandlung erfolgt.

8. Verfahren nach einem der Ansprüche 1 bis 7,
**dadurch gekennzeichnet,**
**dass** eine vollflächige oder partielle Glanzgradeinstellung als nachfolgende Oberflächenbehandlung erfolgt.

9. Verfahren nach einem der Ansprüche 1 bis 8,
**dadurch gekennzeichnet,**
**dass** die Verwendung eines Epoxidharzes oder Silikonharzes zur Abformung erfolgt.

10. Verfahren nach einem der Ansprüche 1 bis 9,
**dadurch gekennzeichnet,**
**dass** die Herstellung der Oberflächentopografie eines Presswerkzeuges auf einer glatten oder strukturierten Oberfläche vorgenommen wird.

## Claims

1. A method for producing a hydrophobic or superhydrophobic surface topography of a pressing tool in the form of a pressing plate (1), endless belt or an embossing roller for producing plastic films, separating films, PVC surfaces and LVTs (luxury vinyl tiles), comprising the steps of:
- preparing a natural template having a microstructure,
- making an impression of the surface by means of a resin,
- scanning the molded surface topography by means of a 3D scanner,
- measuring the depth of the surface topography using a 3D microscope,
- converting the digitized data from the scanning process and the depth measurement into grayscale bitmaps,
- using the grayscale bitmaps to control the treatment process of a chemical or abrasive surface treatment.

2. The method according to claim 1, **characterized in that** the greyscale bitmaps are used for applying a mask according to a digitized printing method for further surface treatments.

3. The method according to claim 2, **characterized in that** the mask is comprised of a UV lacquer.

4. The method according to claim 2 or 3, **characterized in that** a chemical processing of the surface of the pressing tool takes place after applying the mask, the duration of the etging process being determined based on the detected depth of the molded surface topography.

5. The method according to claim 1, **characterized in that** an abrasive processing of the surface of the pressing tool takes place, the dwell time of the abrasive tool, for example a water jet, or the dwell time, focusing and/or intensity of a laser beam being determined on the basis of the grayscale bitmaps.

6. The method according to any of claims 1 to 5, **characterized in that** a subsequent surface treatment takes place by means of electro-polishing or mechanical polishing.

7. The method according to any one of claims 1 to 6, **characterized in that** a complete and/or partial hard chrome plating (9) of the surface topography of a pressing tool takes place as a subsequent surface treatment.

8. The method according to any one of claims 1 to 7, **characterized in that** a full-surface or partial setting of the degree of gloss takes place as a subsequent surface treatment.

9. The method according to any one of claims 1 to 8, **characterized in that** an epoxy resin or silicone resin is used to make the impression.

10. The method according to any one of claims 1 to 9, **characterized in that** producing the surface topography of a pressing tool is carried out on a smooth or structured surface.

## Revendications

1. Procédé de fabrication d'une topographie de surface hydrophobe ou super-hydrophobe d'un outil de presse sous la forme d'une tôle de presse (1), d'une bande sans fin ou d'un rouleau de gaufrage pour la fabrication de films de séparation, de surfaces en PVC et de LVT (luxury vinyl tiles), comprenant les étapes suivantes :
- préparation d'une ébauche de surface avec une micro-structure,
- relevé de la surface avec une résine,
- balayage de la surface moulée avec un scanner 3D,
- mesure de la topographie de surface avec un microscope 3D,
- conversion des données numériques provenant du processus de balayage avec mesure de profondeur en bitmaps à niveaux de gris,
- utilisation des bitmaps à niveaux de gris pour la commande du processus de traitement d'un traitement de surface abrasif ou chimique.

2. Procédé selon la revendication 1, **caractérisé en ce que** les bitmaps à niveaux de gris sont utilisés pour l'application d'un masque selon un procédé de compression numérisé pour d'autres traitements de surfaces.

3. Procédé selon la revendication 2, **caractérisé en ce que** le masque est constitué d'une peinture UV.

4. Procédé selon la revendication 2 ou 3, **caractérisé en ce que** un traitement chimique de la surface de l'outil de presse a lieu après l'application du masque, la durée du processus de gravure étant déterminée par la profondeur déterminée de la topographie de surface moulée.

5. Procédé selon la revendication 1, **caractérisé en ce que** un traitement abrasif de la surface de l'outil de presse a lieu, la durée de séjour de l'outil abrasif, par exemple d'un jet d'eau, ou la durée de séjour, la focalisation et/ou l'intensité d'un rayon laser est déterminée par les bitmaps à niveaux de gris.

6. Procédé selon l'une des revendications 1 à 5, **caractérisé en ce que** un traitement de surface suivant a lieu par électro-polissage ou polissage mécanique.

7. Procédé selon l'une des revendications 1 à 6, **caractérisé en ce que** un chromage dur (9) complet et/ou partiel de la topographie de surface d'un outil de presse a lieu en tant que traitement de surface suivant.

8. Procédé selon l'une des revendications 1 à 7, **caractérisé en ce que** un réglage complet ou partiel de la brillance a lieu en tant que traitement de surface suivant.

9. Procédé selon l'une des revendications 1 à 8, **caractérisé en ce que** une résine époxy ou une résine au silicone est utilisée pour le moulage.

10. Procédé selon l'une des revendications 1 à 9, **caractérisé en ce que** la réalisation de la topographie de surface d'un outil de presse est effectuée sur une surface lisse ou structurée.
